# EUROPEAN PATENT SPECIFICATION

(11) **EP 2 860 763 B1**
(45) Date of publication and mention of the grant of the patent: **31.10.2018**
(21) Application number: 13797619.7
(22) Date of filing: 31.05.2013
(51) Int. Cl.: H01L 31/042, E04D 13/18, F24S 25/35, F24S 25/65, H02S 20/23

(54) **PHOTOVOLTAIC SYSTEM AND HOLDER UNIT**
PHOTOVOLTAIKANLAGE UND AUFNAHMEEINHEIT
SYSTÈME PHOTOVOLTAÏQUE ET UNITÉ DE SUPPORT

(30) Priority: 31.05.2012 JP 2012124234
(43) Date of publication of application: 15.04.2015
(73) Proprietor: Kyocera Corporation, Kyoto-shi, Kyoto 612-8501 (JP)
(72) Inventor: NISHIO Yuuta, Kyoto-shi Kyoto 612-8501 (JP)
(74) Representative: Viering, Jentschura & Partner mbB Patent- und Rechtsanwälte
(86) International application number: PCT/JP2013/065211
(87) International publication number: WO 2013/180275

(56) References cited:
- EP-A1- 2 716 835
- EP-A2- 2 372 269
- WO-A1-2006/086808
- WO-A1-2006/086808
- WO-A1-2012/011966
- WO-A2-2011/069840
- FR-A1- 2 958 381
- FR-A1- 2 960 049
- JP-A- 2004 116 240
- JP-A- 2006 307 627

## Description

### Technical Field

The present invention relates to a holder unit and a photovoltaic system.

### Background Art

Regarding photovoltaic systems, there has been a need to reduce the number of components of a holder for holding solar cell modules and to reduce the man-hours needed for attachment of the photovoltaic system.

For this reason, a technology has been proposed in which a solar cell module is fitted into a space between a fitting groove in an upper part of a rack and a fitting groove in a lower part of the rack in the same way as a sliding door is fitted into a space between an upper rail and a lower rail (see, for example, prior art documents WO 02/41407 A1, WO 2006/086808 A1 and EP 2372269). With this technology, an insertion projection, which projects from a middle part of an end of a frame of the solar cell module in the thickness direction, is diagonally inserted into a downwardly-facing groove of a support base on the ridge side.

WO 2006/086808 A1 discloses a support frame for panel-type solar cell modules or solar collector modules, comprising at least two parallel longitudinal beams for fixing the modules on a mounting plane. The modules can be placed adjacent to one another, their edge sections adjoining end faces that run parallel to the longitudinal beams, in first and second receiving grooves, which are arranged on opposing longitudinal sides of the longitudinal beams. The frame is equipped with inserts for preventing or restricting an orthogonal displacement of the modules on their planes in relation to the longitudinal beams, said inserts being introduced into gaps between the first end face of the respective module that lies in the first receiving groove and the base of said first receiving groove.

EP 2372269 A2 discloses a connecting device and profile assembly. The device has a base body with an attachment section having an attachment side attached to a component and a retaining side provided opposite to the attachment side. A clamping device projects from the retainer side and has a holding element with a holding section for holding a profile. A clamping element forms a retaining chamber for retaining the profile. The clamping element is formed in the base body and has a clamping section attached with the profile, where the clamping section is pivotable relative to the holding element against intrinsic spring force.

### Summary of Invention

### Problem to be solved by the Invention

Regarding solar cell modules, there has been a need for resource saving and weight reduction, which can be achieved by reducing the thickness of the frame of solar cell modules. However, when the thickness of the frame is reduced, it is difficult to provide an insertion projection on a middle part of the frame in the thickness direction as in the technology of WO 02/41407 A1. If an insertion projection were provided, the thickness of the insertion projection would be excessively small, which may result in the insertion projection being easily broken when a load is applied to the solar cell module.

Moreover, with the technology described in WO 02/41407 A1, the holder has a large size, because the holder has a downwardly-facing groove into which the insertion projection is inserted. As a result, the area of a region on the light-receiving side of the photovoltaic system in which the solar cell module is not disposed is increased.

Therefore, there is a demand for a holder unit and a photovoltaic system photovoltaic system that can realize resource saving, high load-bearing capacity, and an increase in the area of a light-receiving surface used to generate electric power.

### Means for solving the Problems

To solve the problem, the present invention provides a holder unit according to claim 1 and a photovoltaic system according to claim 5. Further advantageous embodiments of the present invention are disclosed in the dependent claims.

### Advantageous Effects of Invention

The photovoltaic system according to the present invention can realize resource saving, high load-bearing capacity, and an increase in the area of a light-receiving surface used for generating electric power.

The holder unit according to the present invention can realize resource saving, high load-bearing capacity, and an increase in the area of a light-receiving surface used for generating
electric power, regarding a photovoltaic system.

### Brief Description of Drawings

Fig. 1 is a schematic perspective view illustrating a photovoltaic system according to the invention.
Fig. 2 is a schematic perspective view illustrating an attachment unit according to the invention.
Fig. 3 is a schematic exploded perspective view illustrating a part of the attachment unit according to the invention.
Fig. 4 is a schematic perspective view illustrating a part of the attachment unit according to the invention.
Fig. 5 is a schematic plan view illustrating a structure of a solar cell module.
Fig. 6 illustrates an XZ-cross section taken along a chain line VI-VI of Fig. 5.
Fig. 7 is a simple sectional view illustrating a of the solar cell module.
Fig. 8 is a schematic sectional view illustrating a structure of a holder unit according to the invention.
Fig. 9 is a schematic sectional view illustrating a holder according to the invention.
Fig. 10 is a sectional view illustrating an example of how the distance between holders is set.
Fig. 11 is a sectional view illustrating how the solar cell module is attached to the holders.
Fig. 12 is a sectional view illustrating how the solar cell module is attached to the holders.
Fig. 13 is a sectional view illustrating how the solar cell module is attached to the holders.
Fig. 14 is a schematic sectional view illustrating a holder according to a first modification.
Fig. 15 is a schematic sectional view illustrating a holder unit according to the first modification.
Fig. 16 is a sectional view illustrating how a solar cell module is attached to the holder according to the first modification.
Fig. 17 is a sectional view illustrating how the solar cell module is attached to the holder according to the first modification.
Fig. 18 is a sectional view illustrating how the solar cell module is attached to the holder according to the first modification.
Fig. 19 is a sectional view illustrating how a solar cell module is attached to a holder according to a second modification.
Fig. 20 is a sectional view illustrating how the solar cell module is attached to the holder according to the second modification.
Fig. 21 is a sectional view illustrating how the solar cell module is attached to the holder according to the second modification.
Fig. 22 is a sectional view illustrating how a solar cell module is attached to a holder according to the third modification.
Fig. 23 is a sectional view illustrating how the solar cell module is attached to the holder according to the third modification.
Fig. 24 is a sectional view illustrating how the solar cell module is attached to the holder according to the third modification.
Fig. 25 is a schematic perspective view illustrating a part of an attachment unit according to the third modification.

### Mode for carrying out of the Invention

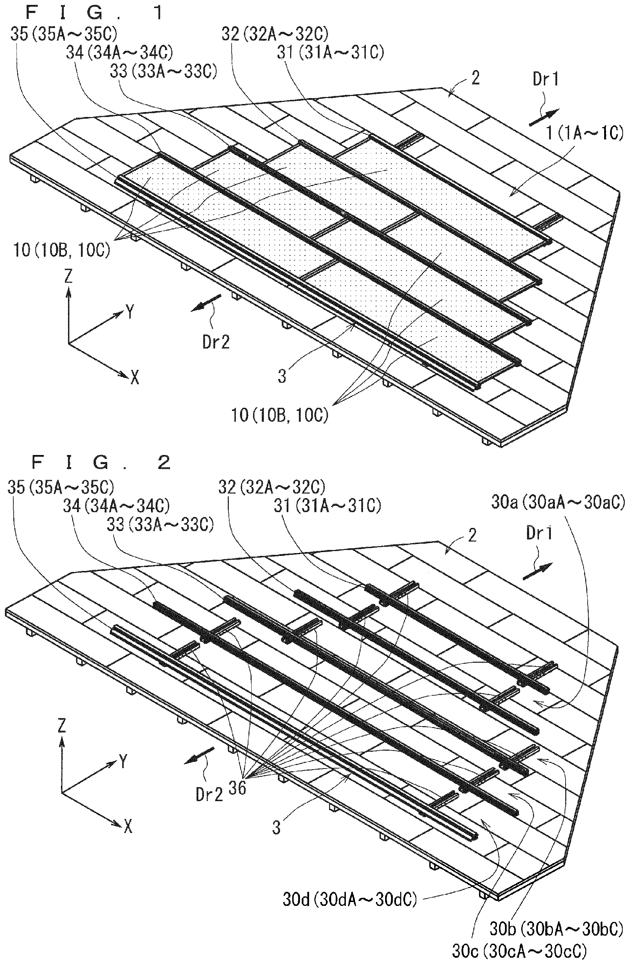

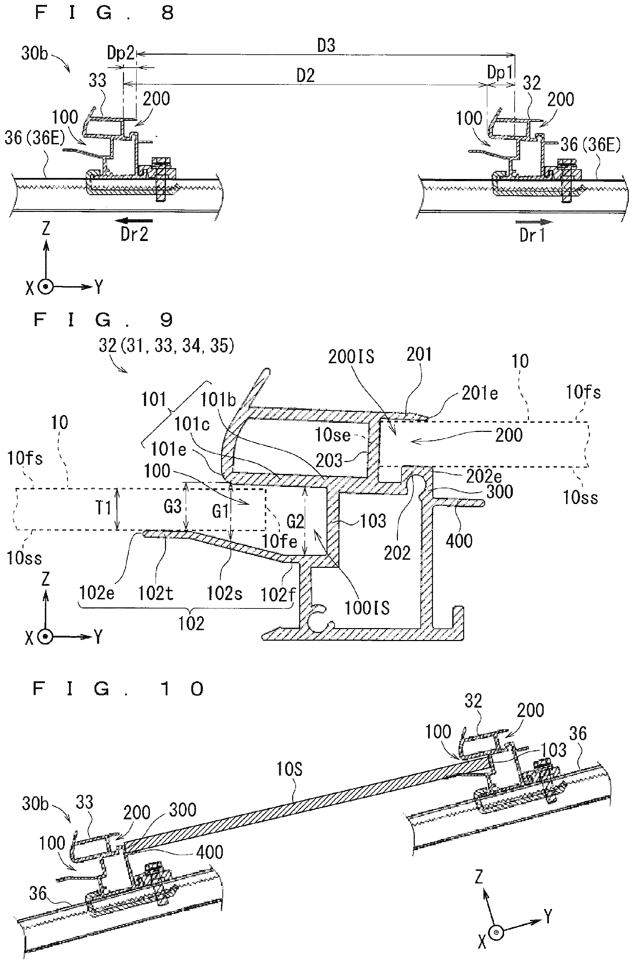

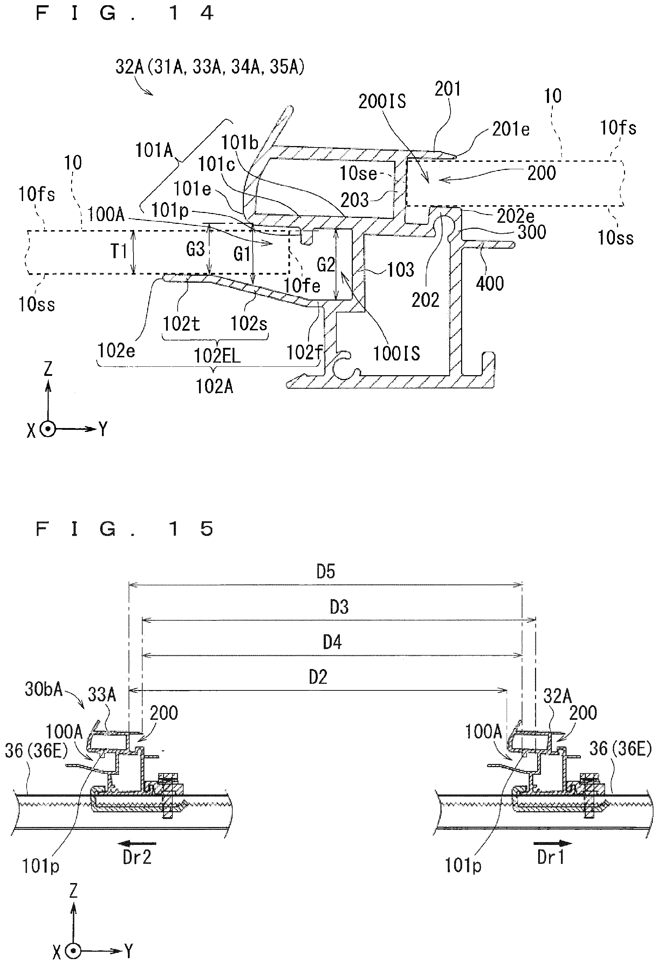

Hereinafter, an embodiment of the present invention and modifications of the embodiment will be described with reference to the drawings. In each of Figs. 1 to 25, a right-handed XYZ coordinate system is shown. In the coordinate system, the +X direction is a direction in which eaves at a lower end of a roof 2 extend; and the +Y direction is a direction from the eaves toward a ridge, which is the highest part of the roof. In Figs. 1, 2, 8, and 15, an arrow Dr1 indicates a first direction, which corresponds to the +Y direction from the eaves toward the ridge of the roof 2; and an arrow Dr2 indicates a second direction, which corresponds to the -Y direction from the ridge toward the eaves of the roof 2. In Figs. 9 and 14, broken lines represent the outlines of regions in which solar cell modules 10 are disposed in a photovoltaic system 1.

### Invention

### <(1-1) Overview of Solar Cell Apparatus>

As illustrated in Fig. 1, the photovoltaic system 1 is disposed on the roof 2. The photovoltaic system 1 includes an attachment unit 3 and one or more (here, seven) solar cell modules 10.

As illustrated in Figs. 1 and 2, the attachment unit 3 includes a plurality of fixing members 36 and a plurality of holders 31 to 35.

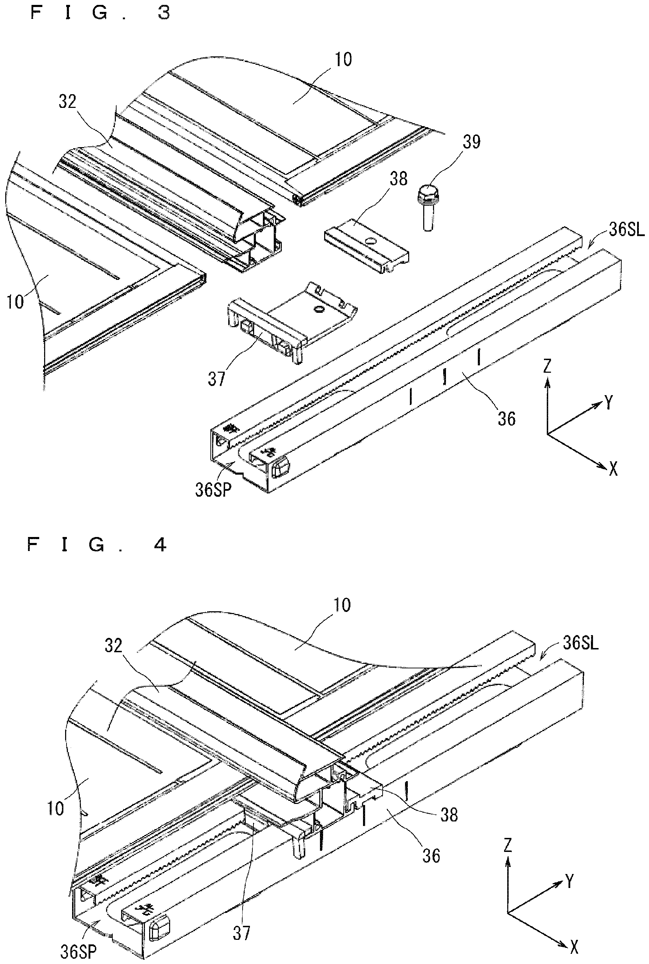

The fixing members 36 extend along the Y-axis. The fixing members 36 are placed on the roof 2 and are fixed to rafters by using, for example, wood screws or the like extending through the roof boards and the like of the roof 2. In Figs. 1 and 2, five pairs of the fixing member 36 are sequentially arranged from the ridge toward the eaves. In each pair of which the fixing members 36 are separated from each other and extend parallel to each other. As illustrated in Fig. 3, each of the fixing members 36 is a quadrangular tube having a hollow portion 36SP extending parallel to the Y-axis. The fixing member 36 has a slit 36SL formed on the +Z side thereof and extending along the Y-axis.

The holders 31 to 35 are substantially bar-like members for holding the solar cell module 10. To be specific, the holder 31 extends from one of the pairs of fixing members 36 on the +X side, the pair being the nearest to the ridge, to the other of the pair of fixing members 36 on the -X side. A holder 32 extends from one of the pairs of fixing members 36 on the +X side, the pair being the second nearest to the ridge, to the other of the pair of fixing members 36 on the -X side. Likewise, the holder 33, the holder 34, and the holder 35 respectively extend from a corresponding one of the pairs of fixing members 36 on the +X side, the pairs being the third, fourth, and fifth nearest to the ridge, to the other of the pair of fixing members 36 on the -X side.

The holders 31 to 35 are fixed to the fixing members 36 in the same manner. As a typical example, how the holder 32 is fixed to the fixing members 36 will be described. As illustrated in Figs. 3 and 4, each of the holders 31 to 35 is fixed to one of the fixing members 36 by using fixing metal pieces 37 and 38, a screw 39, and the slit 36SL of the fixing member 36. Thus, the five holders 31 to 35 extend substantially parallel to the X-axis and are arranged in the direction from the ridge toward the eaves.

As illustrated in Figs. 1 and 2, one solar cell module 10 is attached to a holder unit 30a, which includes the holder 31 and the holder 32. Two solar cell modules 10 are attached to a holder unit 30b, which includes the holder 32 and the holder 33. Two solar cell modules 10 are attached to a holder unit 30c, which includes the holder 33 and the holder 34. Two solar cell modules 10 are attached to a holder unit 30d, which includes the holder 34 and the holder 35. Thus, a plurality of solar cell modules 10 are arranged.

### <(1-2) Solar Cell Module>

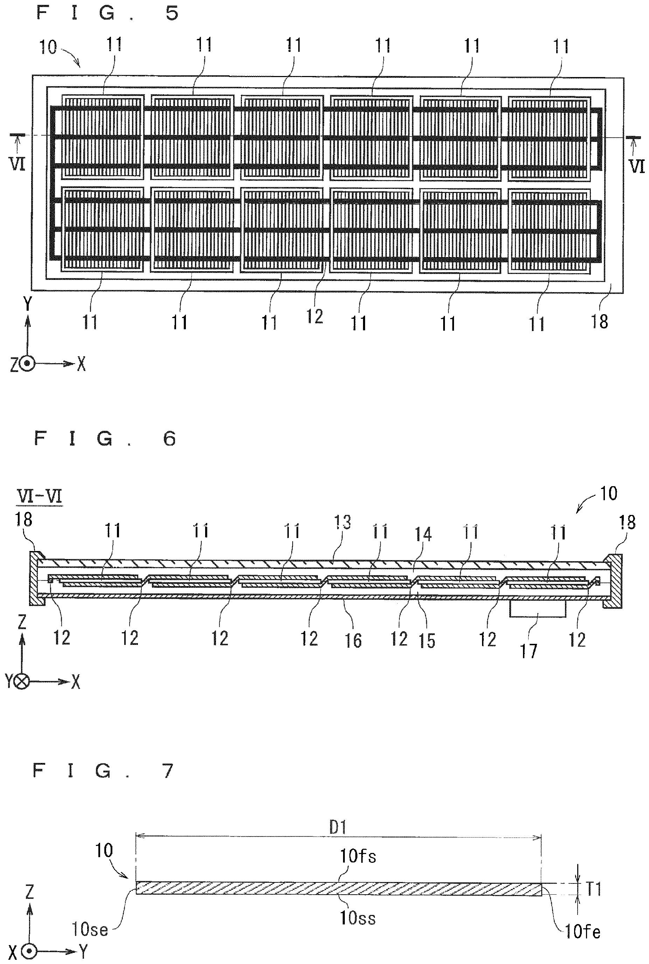

As illustrated in Fig. 5, for example, each of the solar cell modules 10 includes a plurality of solar cells 11 that are electrically connected in series through wiring members 12. For example, by combination of a plurality of solar cell modules 10, it is possible to output electric power that can be practically used.

As illustrated in Figs. 5 and 6, for example, the solar cell module 10 includes a stack of a transparent member 13, a front side filler 14, the plurality of solar cells 11, the wiring members 12, a back side filler 15, and a back side protector 16.

The transparent member 13 is a transparent flat plate-like member for protecting a surface of the solar cell module 10 that receives incident light (also referred to as a light-receiving surface). For example, glass or the like is used as the material of the transparent member 13. The front side filler 14 and the back side filler 15 may be, for example, any transparent fillers. For example, ethylene vinyl acetate copolymer (EVA) or the like is used as the material of the front side filler 14 and the back side filler 15. The back side protector 16 is a member for protecting the back side of the solar cell module 10. For example, polyethylene terephthalate (PET), polyvinyl fluoride (PVF), or the like is used as the material of the back side protector 16.

An end of the first one and an end of the last one of the plurality of solar cells 11, which are electrically connected in series, are connected to a terminal box 17, which serves as a power output unit, through power output wires (not shown). The solar cell module 10 further includes a frame 18 that surrounds and holds the stack. For example, an aluminum alloy or the like having corrosion resistance and strength is used as the material of the frame 18.

The solar cell module 10 has an end (also referred to as a first end) 10fe in the +Y direction, which is one end in a direction along the main surface; and an end (also referred to as a second end) 10se in the -Y direction, which is the other end opposite to the first end 10fe. The direction along the main surface may be, for example, the short direction of the main surface. The distance between the first end 10fe and the second end lOse is a first distance D1. The solar cell module 10 has a main surface (also referred to as a first main surface) 10fs, which serves as a light-receiving surface; and another main surface (also referred to as a second main surface) lOss, which is a surface (also referred to as a non-light-receiving surface) behind the first main surface 10fs. The thickness of the solar cell module 10 is a thickness T1. The thickness T1 may be, for example, approximately 6.4 mm. The width of a part of the frame 18 on the first main surface 10fs may be, for example, approximately 8 mm.

### <(1-3) Holder Unit>

### <(1-3-1) Overview of Structure of Holder Unit>

The holder units 30a to 30d may have, for example, structures the same as each other. Therefore, the holder unit 30b, which includes the holder 32 and the holder 33, will be described as an example. The holders 31 to 35 may have, for example, structures the same as each other. Therefore, the holder 32 will be described as an example.

As illustrated in Fig. 8, the holder unit 30b includes the holder 32, which serves as a first holder, and the holder 33, which serves as a second holder.

### <(1-3-2) Overview of Structure of Holder>

As illustrated in Fig. 9, each of the holders 31 to 35 includes a groove portion (also referred to as a first groove portion) 100, which has an opening facing in the -Y direction. For example, the first groove portions 100 of the holder 31, 32, 33, and 34 respectively have openings facing the holder 32, 33, 34, and 35. Each of the first groove portions 100 of the holders 31 to 34 allows the first end 10fe of the solar cell module 10 to be inserted thereinto in the first direction Dr1.

Each of the holders 31 to 35 includes a groove portion (also referred to as a second groove portion) 200, which has an opening facing in the +Y direction. For example, the second groove portions 200 of the holder 32, 33, 34, and 35 respectively have openings facing the holder 31, 32, 33, and 34. Each of the second groove portions 200 of the holders 32 to 35 allows the second end 10se of the solar cell module 10 to be inserted thereinto in the second direction Dr2.

### <(1-3-3) Structure of First Groove Portion>

As illustrated in Fig. 9, the first groove portion 100 includes a first front portion 101 located on the +Z side; a first back portion 102 located on the -Z side; and a first side portion 103 located on the +Y side. The first front portion 101 faces the first main surface 10fs of the solar cell module 10, which is the light-receiving surface. The first front portion 101 includes an extending portion 101c extending from a base 101b, which is located on the +Y side, to an end 101e, which is located on the -Y side. The first back portion 102 faces the second main surface 10ss of the solar cell module 10, which is back side of the first main surface 10fs. In other words, in the first groove portion 100, the first front portion 101 and the first back portion 102 face each other. The first side portion 103 connects the first front portion 101 to the first back portion 102. Therefore, in the first groove portion 100, an internal space 100IS is formed by the first front portion 101, the first back portion 102, and the first side portion 103.

As shown by broken lines in Fig. 9, in the photovoltaic system 1, one of the solar cell modules 10 is inserted into the first groove portion 100. The first back portion 102 serves as a portion (also referred to as a first supporting portion) that supports the solar cell module 10 from the second main surface lOss side. The first front portion 101 serves as a portion (also referred to as a first removal-suppressing portion) that suppresses removal of the solar cell module 10 from the first groove portion 100.

For example, in the first groove portion 100, a gap between the first front portion 101 and the first back portion 102 in the -Z direction, which corresponds to a third direction from the first front portion 101 toward the first back portion 102, increases in the internal space 100IS. Regarding the photovoltaic system 1, the third direction corresponds to the thickness direction of the solar cell module 10.

To be specific, the first groove portion 100 has a gap (also referred to as a first gap) G1 in the Z direction between the end 101e and a part of the first back portion 102 facing the end 101e. The first gap G1 is larger than the thickness T1 of the solar cell module 10. The first groove portion 100 has a gap (also referred to as a second gap) G2 in the Z direction, which is located closer to the first side portion 103 than the first gap G1 is. As with the first gap G1, the second gap G2 is a gap in the Z direction between the first front portion 101 and the first back portion 102. The second gap G2 is larger than first gap G1. To be specific, the second gap G2 is larger than the first gap G1 in the -Z direction. For example, if the thickness T1 of the solar cell module 10 is 6.4 mm, the first gap G1 may be approximately 7 mm, and the second gap G2 may be approximately 9 mm.

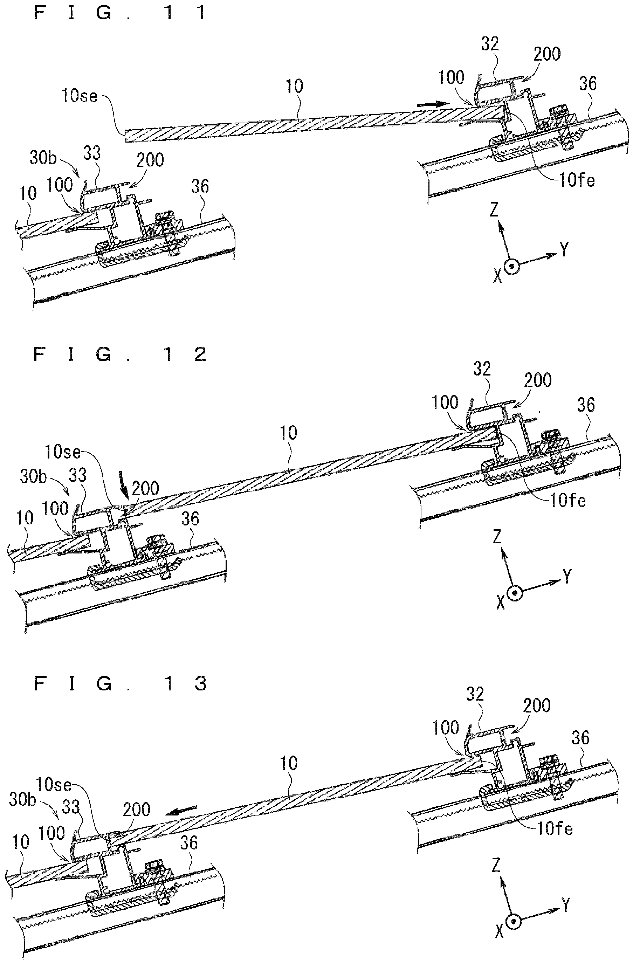

Because the first groove portion 100 has the structure described above, as illustrated in Figs. 11 and 12, it is possible to insert the solar cell module 10 into the first groove portion 100 in a state in which the solar cell module 10 is inclined in such a way that the second end 10se is located further in the +Z direction from the first end 10fe. Subsequently, a part of the solar cell module 10 in contact with the first back portion 102 serves as a fulcrum, and the solar cell module 10 can be rotated slightly so that the second end lOse moves in the -Z direction.

The gap between the first front portion 101 and the first back portion 102 may gradually increase, in the -Z direction, toward the first side portion 103. Alternatively, the gap may increase in a stepwise manner. If the first back portion 102 includes an inclined portion 102s and a gap between the inclined portion 102s and the first front portion 101 increases toward the first side portion 103 from a part of the inclined portion 102s facing the end 101e, the solar cell module 10 can be smoothly inserted into the first groove portion 100. Thus, the solar cell module 10 is not easily broken.

As illustrated in Fig. 9, the first back portion 102 includes a first flat portion 102f, the inclined portion 102s, and a second flat portion 102t, which are arranged in the -Y direction from the first side portion 103 and which respectively correspond to a first section, a second section, and an a third section. In this case, in the photovoltaic system 1, the distance between the solar cell module 10 and the inclined portion 102s increases toward the first side portion 103.

As illustrated in Fig. 9, the first gap G1 is larger than a gap (also referred to a third gap) G3 between the first back portion 102 and an extension surface extending from the first front portion 101 in the -Y direction. To be specific, the first gap G1 is larger than the third gap G3 in the -Z direction.

If an end 102e of the first back portion 102 in the -Y direction is located further in the -Y direction from the end 101e of the first front portion 101, it is possible to insert the first end 10fe of the solar cell module 10 into the first groove portion 100 after placing the first end 10fe on the second flat portion 102t of the first back portion 102. At this time, because the solar cell module 10, which has a certain weight, is supported by the second flat portion 102t, the solar cell module 10 can be easily inserted into the first groove portion 100.

To be specific, for example, if the end 102e of the holder 31 is located nearer to the holder 32 than the end 101e is, the solar cell module 10 can be easily inserted into the first groove portion 100 of the holder 31. The same applies to the holders 32, 33, and 34. For example, the end 102e of the first back portion 102 may be separated from the end 101e of the first front portion 101 by approximately 9 mm in the -Y direction.

When the solar cell module 10 is attached to the holder unit 30b by being inserted into the first groove portion 100 and the second groove portion 200, the second main surface lOss of the solar cell module 10 is in contact with the first back portion 102. At this time, as the distance between the first main surface 10fs of the solar cell module 10 and the first front portion 101 becomes closer to zero, a failure in that the solar cell module 10 is vibrated with a small amplitude and rattled in the first groove portion 100 due to wind or the like is more unlikely to occur. In other words, it is sufficient that the distance between the first back portion 102 and the first front portion 101 (also referred to as a first opening height) in the +Z direction, which corresponds to the thickness direction of the solar cell module 10, is substantially equal to the thickness T1 of the solar cell module 10. In this case, a holder unit 30 can stably hold the solar cell module 10.

However, if the first opening height is slightly larger than the thickness T1 of the solar cell module 10, the second end lOse can be easily inserted into the second groove portion 200 while displacing the first end 10fe in the -Y direction in the internal space 100IS of the first groove portion 100. For example, if the thickness T1 of the solar cell module 10 is approximately 6.4 mm, the first opening height may be approximately 6.8 mm.

### <(1-3-4) Structure of Second Groove Portion>

The second groove portion 200 includes a second front portion 201 located on the +Z side; a second back portion 202 located on the -Z side; and a second side portion 203 located on the -Y side. The second front portion 201 faces the first main surface 10fs of the solar cell module 10. The second back portion 202 faces the second main surface lOss of the solar cell module 10. In other words, in the second groove portion 200, the second front portion 201 and the second back portion 202 face each other. The second side portion 203 connects the second front portion 201 to the second back portion 202. Therefore, in the second groove portion 200, an internal space 200IS is formed by the second front portion 201, the second back portion 202, and the second side portion 203.

As shown by broken lines in Fig. 9, in the photovoltaic system 1, one of the solar cell modules 10 is inserted into the second groove portion 200. The second back portion 202 serves as a portion (also referred to as a second supporting portion) that supports the solar cell module 10 from the second main surface lOss side. The second front portion 201 serves as a portion (also referred to as a second removal-suppressing portion) that suppresses removal of the solar cell module 10 from the second groove portion 200.

When the solar cell module 10 is attached to the holder unit 30b by being inserted into the first groove portion 100 and the second groove portion 200, the second main surface lOss of the solar cell module 10 is in contact with the second back portion 202. At this time, as the distance between the first main surface 10fs of the solar cell module 10 and the second front portion 201 becomes closer to zero, a failure in that the solar cell module 10 is vibrated with a small amplitude and rattled in the second groove portion 200 due to wind or the like is more unlikely to occur. In other words, it is sufficient that the distance between the second back portion 202 and the second front portion 201 (also referred to as a second opening height) in the +Z direction, which corresponds to the thickness direction of the solar cell module 10, is substantially equal to the thickness T1 of the solar cell module 10. In this case, the holder unit 32b can stably hold the solar cell module 10.

However, if the second opening height is slightly larger than the thickness T1 of the solar cell module 10, the second end 10se can be easily inserted into the second groove portion 200 in the -Y direction. For example, if the thickness T1 of the solar cell module 10 is approximately 6.4 mm, the second opening height may be approximately 6.8 mm.

As illustrated in Fig. 9, each of the holders 32 to 35, which serves as a second holder, includes an extending portion 300. From an end 202e of the second back portion 202 in the +Y direction, the extending portion 300 extends in the -Z direction, which is a direction away from the second front portion 201. Each of the holders 32 to 35 includes an overhanging portion 400, which sticks out from the extending portion 300 toward a corresponding one of the holders 31 to 34, which serves as a first holder. The extending portion 300 and the overhanging portion 400 can be used to set the distance between each of the holders 31 to 34 of the holder units 30a to 30d, each serving as a first holder, and a corresponding one of the holders 32 to 35 of the holder units 30a to 30d, each serving as a second holder.

### <(1-3-5) Dimensional Relationship of Holder Unit>

As illustrated in Figs. 8 and 9, the first groove portion 100 has a depth (also referred to as a first depth) Dp1, in the first direction Dr1, from the end 101e to the first side portion 103. The second groove portion 200 has a depth (also referred to as a second depth) Dp2, in the second direction Dr2, from an end 201e of the second front portion 201 in the +Y direction to the second side portion 203. The first depth Dp1 is larger than second depth Dp2.

The first distance D1 between the first end 10fe and the second end lOse of the solar cell module 10 is larger than the distance (also referred to as a second distance) D2 between the end 101e of the first front portion 101 of the holder 32 and the second side portion 203 of the holder 33. The first distance D1 is smaller than the distance (also referred to as a third distance) D3 between the end 201e of the second front portion 201 of the holder 33 and the first side portion 103 of the holder 32. Thus, after the first end 10fe of the solar cell module 10 has been inserted into the first groove portion 100 of the holder 32, the second end lOse of the solar cell module 10 can be inserted into the second groove portion 200 of the holder 33. In the state in which the solar cell module 10 is inserted into the first groove portion 100 of the holder 32 and the second groove portion 200 of the holder 33, the holder unit 30b can stably hold the solar cell module 10 because the first distance D1 is larger than the second distance D2. Here, the holder unit 30b is described as an example. Each of the holder units 30a, 30c, and 30d may have a structure the same as that of the holder unit 30b.

With the photovoltaic system 1, if a part of the frame 18 of each of the solar cell modules 10 on the first main surface 10fs side, the part being located near the first end 10fe, is disposed in the first groove portion 100, decrease in the light-receiving area of the first main surface 10fs, which serves to generate electric power, can be reduced. With the photovoltaic system 1, if a part of the frame 18 of each of the solar cell modules 10 on the first main surface 10fs side, the part being located near the second end 10se, is disposed in the second groove portion 200, decrease in the light-receiving area of the first main surface 10fs, which serves to generate electric power, can be reduced. For example, if the width of the frame 18 on the first main surface 10fs is approximately 8 mm, the first depth Dp1 may be approximately 18 mm, and the second depth Dp2 may be approximately 8 mm.

### <(1-4) Attachment Process of Solar Cell Module>

### <(1-4-1) Overview of Attachment Process of Holder Unit>

When attaching the solar cell modules 10 onto the roof 2, first, the attachment unit 3 is attached to the roof 2 as illustrated in Fig. 2. At this time, the fixing members 36 are arranged on the roof 2 and fixed to the roof 2 by using wood screws or the like.

Next, as illustrated in Figs. 3 and 4, the holders 31 to 35 are fixed to the fixing members 36 by using the slits 36SL of the fixing members 36, the fixing metal pieces 37 and 38, and the screws 39. At this time, as illustrated in Fig. 10, the distances D2 and D3 of each of the holder units 30a to 30d are set by using a jig 10S, which has the same size as the solar cell module 10. For example, the holders 32 and 33 may be fixed to the fixing members 36 in a state in which one end of the jig 10S is in contact with the first side portion 103 and the other end of the jig 10S opposite to the one end is placed on the overhanging portion 400 and in loose contact with the extending portion 300. By fixing the holders 31 to 35 to the fixing members 36 in this way, the distances D2 and D3 of each of the holder units 30a to 30d can be easily set with high precision. Instead of the jig 10S, the solar cell module 10 may be used.

Subsequently, the solar cell modules 10 are attached to the corresponding holder units 30a to 30d, thereby finishing an operation of attaching the solar cell modules 10 onto the roof 2.

### <(1-4-2) Attachment of Solar Cell Module to Holder unit>

The operation of attaching the solar cell module 10 to each of the holder units 30a to 30d is in the same manner. Therefore, an operation of attaching the solar cell module 10 to the holder unit 30b will be described as an example.

First, as illustrated in Fig. 11, the first end 10fe of the solar cell module 10 is inserted into the first groove portion 100 of the holder 32, which serves as a first holder. At this time, the solar cell module 10 is inserted into the first groove portion 100 in a state in which the solar cell module 10 is inclined with respect to the first groove portion 100 in such a way that the second end lOse is located further in the +Z direction from the first end 10fe. In other words, the first groove portion 100 allows the first end 10fe of the solar cell module 10 to be inserted thereinto in the +Y direction, which corresponds to the first direction Dr1. At this time, it is sufficient that the first end 10fe contacts the first side portion 103. The transparent member 13 does not contact the first front portion 101 and the first back portion 102 owing to the presence of parts of the frame 18 of the solar cell module 10 on the +X or -X side. Thus, it is not likely that the surface of the transparent member 13 is scratched and it is not likely that the power generation efficiency of the solar cell module 10 is reduced.

Next, as illustrated in Fig. 12, a part of the solar cell module 10 in contact with the first back portion 102 serves as a fulcrum, and the solar cell module 10 is rotated slightly so that the second end lOse moves in the -Z direction. At this time, the solar cell module 10 becomes substantially parallel to the Y-axis, and the second end 10se is moved to a position in front of the opening of the second groove portion 200.

Moreover, as illustrated in Fig. 13, by displacing the solar cell module 10 in the -Y direction, the second end lOse of the solar cell module 10 is inserted into the second groove portion 200 of the holder 33, which serves as a second holder. In other words, the second groove portion 200 allows the second end lOse of the solar cell module 10 to be inserted thereinto in the -Y direction, which corresponds to the second direction Dr2. Thus, the first end 10fe is inserted into the first groove portion 100 and the second end lOse is inserted into the second groove portion 200.

As described above, one or more solar cell modules 10 are attached to the holder units 30a to 30d, and thereby assembly of the photovoltaic system 1 is finished.

### <(1-5) Summary of the Invention>

As heretofore described, the photovoltaic system 1 according to the present embodiment includes the solar cell module 10, a first holder (for example, the holder 32) including the first groove portion 100, and a second holder (for example, the holder 33) including the second groove portion 200. The first groove portion 100 has a first gap G1 between the end 101e and a part of the first back portion 102 facing the end 101e in the +Z direction corresponding to the thickness direction of the solar cell module 10. The first gap G1 is larger than the thickness T1 of the solar cell module 10. The first groove portion 100 has the second gap G2, which is located nearer to the first side portion 103 than the first gap G1 and which is larger than the first gap G1. The first groove portion has a third gap G3 between an imaginary extension surface extending from the first front portion 101 and the end 102e. The third gap G3 is smaller than the first gap G1. The first distance D1 between the first end 10fe and the second end lOse is larger than the second distance D2 between the end 101e of the first front portion 101 and the second side portion 203 and is smaller than the third distance D3 between the first side portion 103 and the end 201e of the second front portion 201.

The second holder includes an extending portion 300 and an overhanging portion 400.

Each of the holder units 30a to 30d according to the present embodiment includes a first holder (for example, the holder 32) including the first groove portion 100, and a second holder (for example, the holder 33) including the second groove portion 200. The first groove portion 100 has the first gap G1 between the end 101e and a part of the first back portion 102 facing the end 101e in the -Z direction corresponding to a third direction from the first front portion 101 toward the first back portion 102. The first gap G1 is larger than the thickness T1 of the solar cell module 10. The first groove portion 100 has the second gap G2, which is located nearer to the first side portion 103 than the first gap G1 and which is larger than the first gap G1. The first groove portion has a third gap G3 between an imaginary extension surface extending from the first front portion 101 and the end 102e. The third gap G3 is smaller than the first gap G1. The first depth Dp1 of the first groove portion 100 from the end 101e to the first side portion 103 in the first direction Dr1 is larger than the second depth Dp2 of the second groove portion 200 from the end 201e to the second side portion 203 in the second direction Dr2.

The second holder includes an extending portion 300 and an overhanging portion 400.

With the structure described above, the first holder (for example, the holder 32) and the second holder (for example, the holder 33) each have a comparatively simple structure. Therefore, resource saving can be realized by reducing the sizes of the first holder and the second holder. Moreover, because the area of a region in which the solar cell module 10 is not disposed in the photovoltaic system 1 is reduced, an increase in the light-receiving surface area and an increase in the power generation efficiency can be realized. Furthermore, it is possible to attach the solar cell module 10 onto the roof 2 by performing a simple operation illustrated in Figs. 11 to 13. Therefore, attachment of the solar cell module 10 can be facilitated. Moreover, parts of the frame 18, which are relatively simple and strong parts of the solar cell module 10, are held by the first groove portion 100 and the second groove portion 200. Therefore, the photovoltaic system 1 has a sufficient load-bearing capacity.

### <(2) Modifications>

### <(2-1) First Modification>

In the embodiment described above, the first front portion 101 has a flat plate-like shape. However, this is not a limitation. For example, the first front portion 101 may include a first protrusion 101p between the end 101e and the base 101b on the first side portion 103 side, the first protrusion 101p protruding in the -Z direction, which corresponds to a third direction, from the first front portion 101 toward the first back portion 102.

To be specific, for example, as illustrated in Fig. 14, the holders 31 to 35 may be respectively changed to holders 31A to 35A according to the present modification, in each of which the first front portion 101 is replaced with a first front portion 101A including the first protrusion 101p. Due to the change, the first groove portion 100 is changed to a first groove portion 100A according to the present modification. The holder units 30a to 30d and the photovoltaic system 1 are respectively changed to holder units 30aA to 30dA and a photovoltaic system 1A according to the present modification.

The height of the first protrusion 101p in the -Z direction may be such a height that the distance between the first protrusion 101p and the first back portion 102 is larger than the thickness T1 of the solar cell module 10 and that allows the first end 10fe to be inserted into the first groove portion 100A and to come into contact with the first side portion 103.

In this case, the first back portion 102 may be changed to a first back portion 102A, which includes an elastic portion 102EL that is located between the end 102e and a part of the first back portion 102 facing the first protrusion 101p and that is elastically deformable in the -Z direction in which the first protrusion 101p protrudes. Here, for example, the elastic portion 102EL may be deformable in the -Z direction by a distance that is larger than the height of the first protrusion 101p in the -Z direction. Fig. 14 illustrates an example in which the elastic portion 102EL includes the inclined portion 102s and the second flat portion 102t.

As illustrated in Fig. 15, the distance (also referred to as a fourth distance) D4 between the end 201e of the second front portion 201 and the first protrusion 101p may be smaller than the first distance D1 between the first end 10fe and the second end lOse of the solar cell module 10. The distance (also referred to as a fifth distance) D5 between the second side portion 203 and the first protrusion 101p may be larger than or equal to the first distance D1.

With such a structure, it is possible to fit the solar cell module 10 into a space between the second side portion 203 and the first protrusion 101p. At this time, the first protrusion 101p serves as a stopper that prevents the solar cell module 10 from being excessively displaced in the +Y direction. Therefore, a failure in that the solar cell module 10 is removed from the second groove portion 200 is not likely to occur.

An operation of attaching the solar cell modules 10 to the holder units 30aA to 30dA will be described. Here, for example, an operation of attaching the solar cell module 10 to the holder 32A of the holder unit 30bA will be described as an example.

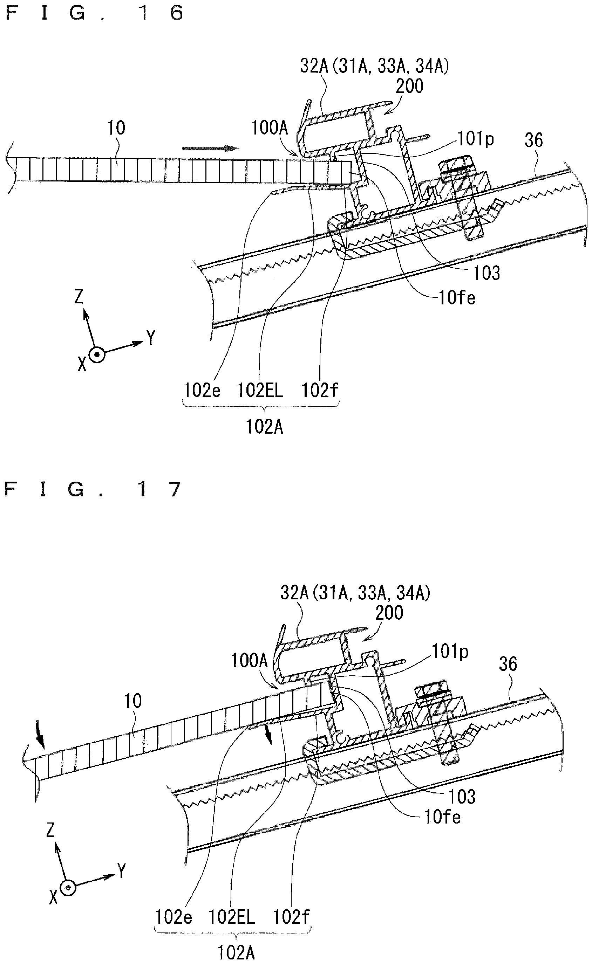

First, as illustrated in Fig. 16, the first end 10fe of the solar cell module 10 is inserted into the first groove portion 100A of the holder 32A, which serves as a first holder. At this time, the first end 10fe of the solar cell module 10 is inserted into the first groove portion 100A in a state in which the solar cell module 10 is inclined with respect to the first groove portion 100A in such a way that the second end lOse is located further in the +Z direction from the first end 10fe. Thus, the solar cell module 10 is disposed in a region in the internal space 100IS extending from a region on the -Z side of the first protrusion 101p to the first side portion 103.

Next, as illustrated in Fig. 17, a part of the solar cell module 10 in contact with the first back portion 102 serves as a fulcrum, and the solar cell module 10 is rotated slightly so that the second end lOse moves in the -Z direction. When the solar cell module 10 contacts the first protrusion 101p, a part of the solar cell module 10 in contact with the first protrusion 101p serves as a fulcrum, and the solar cell module 10 is rotated slightly so that the second end lOse moves in the -Z direction. At this time, the elastic portion 102EL of the first back portion 102A is pushed downward by the second main surface lass of the solar cell module 10 and becomes elastically deformed in the -Z direction. Then, the solar cell module 10 becomes substantially parallel to the Y-axis, and the second end 10se is moved to a position in front of the opening of the second groove portion 200 as illustrated in Fig. 12.

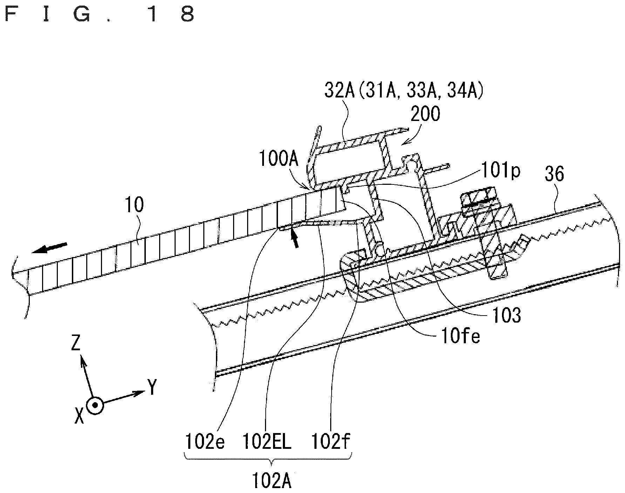

Moreover, As illustrated in Fig. 18, the solar cell module 10 is displaced in the -Y direction. At this time, when the first end 10fe of the solar cell module 10 has been displaced to a position on the -Y side of the first protrusion 101p, the elastic portion 102EL applies an elastic force in the +Z direction to the second main surface lOss of the solar cell module 10, and therefore the solar cell module 10 is slightly shifted in the +Z direction. At this time, as illustrated in Fig. 13, the second end 10se of the solar cell module 10 is inserted into the second groove portion 200. Thus, the first end 10fe is inserted into the first groove portion 100A, and the second end 10se is inserted into the second groove portion 200.

In this state, the first end 10fe of the solar cell module 10 is separated from the first side portion 103 in the first groove portion 100A. Moreover, as illustrated in Fig. 14, the first protrusion 101p, which is located between the end 101e and the base 101b on the first side portion 103 side, protrudes to a position that is nearer to the first back portion 102 than the imaginary extension surface extending from the first main surface 10fs.

Thus, one or more solar cell modules 10 are attached to the holder units 30aA to 30dA, thereby assembly of the photovoltaic system 1A is finished.

As described above, with the photovoltaic system 1A according to the present modification, it is not likely that the solar cell module 10 is removed from the holder units 30aA to 30dA due to the presence of the first protrusion 101p. In the holder units 30aA to 30dA, the first holder (for example, the holder 32) may be disposed on the eaves side, and the second holder (for example, the holder 33) may be disposed on the ridge side.

### <(2-2) Second Modification>

In the embodiment and the first modification, the second flat portion 102t of the first back portion 102 has a flat plate-like shape. However, this is not a limitation. For example, the end 102e of the second flat portion 102t in the -Y direction may have a second protrusion 102p protruding from the second flat portion 102t in the +Z direction. In this case, the solar cell module 10 is changed to a solar cell module 10B in which a recess 18a is formed in a region of the frame 18 on the second main surface lOss side near the first end 10fe.

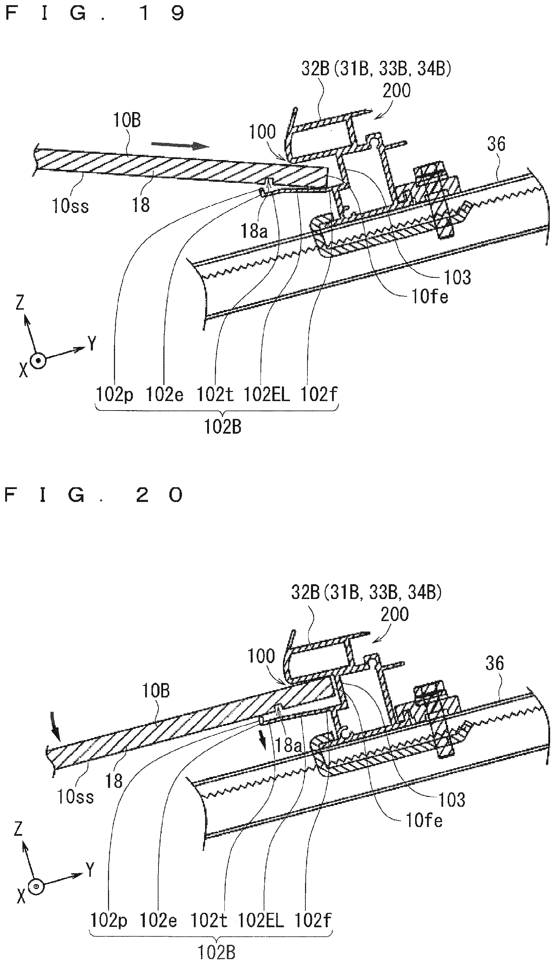

To be specific, for example, as illustrated in Figs. 19 to 21, the holders 31 to 35 may be respectively changed to holders 31B to 35B according to the present modification. Due to the change, the first back portion 102 is replaced with a first back portion 102B including the second protrusion 102p. Moreover, due to the change, the holder units 30a to 30d, the solar cell module 10, and the photovoltaic system 1 are respectively changed to holder units 30aB to 30dB, the solar cell module 10B, and a photovoltaic system 1B according to the present modification.

Here, for example, a holder unit 30bB, which includes a holder 32B serving as a first holder and a holder 33B serving as a second holder, will be described. According to the present modification, for example, in the solar cell module 10B, it is sufficient that the distance between the first end 10fe and the recess 18a is smaller than the distance between the first side portion 103 and the end 102e of the first back portion 102B of the holder 32B. In the solar cell module 10B, the distance between the second end 10se and the recess 18a is almost the same distance between the second side portion 203 of the second groove portion 200 of the holder 33B and the second protrusion 102p of the holder 32B. In this case, the first end 10fe of the solar cell module 10B is inserted into the first groove portion 100 of the holder 32B, and the second protrusion 102p engages with the recess 18a in a state in which the second end lOse of the solar cell module 10B is in contact with the second side portion 203 of the holder 33B.

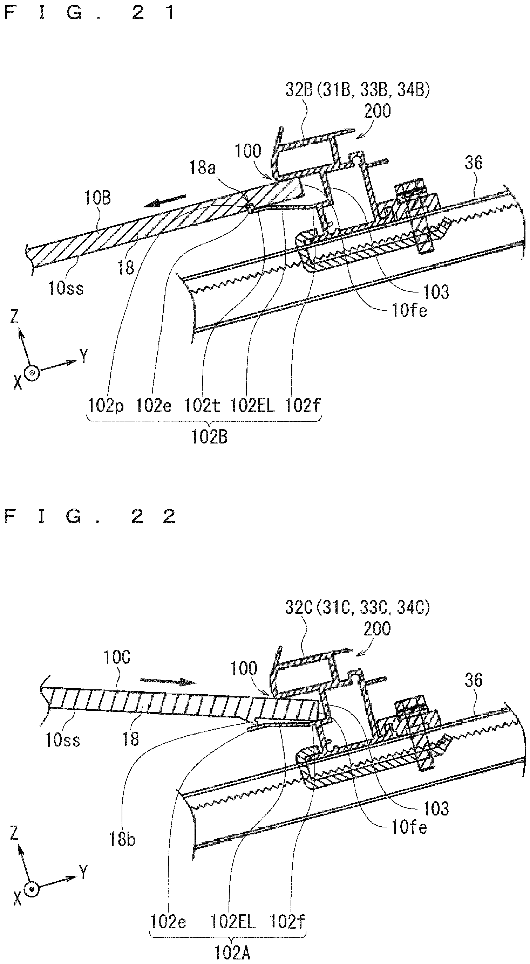

When such a structure is used, first, as illustrated in Fig. 19, the first end 10fe of the solar cell module 10B is inserted into the first groove portion 100 of the holder 32B. At this time, the first end 10fe is inserted into the first groove portion 100 in a state in which the solar cell module 10B is inclined with respect to the first groove portion 100 in such a way that the second end lOse is located further in the +Z direction from the first end 10fe. Next, as illustrated in Fig. 20, a part of the solar cell module 10B in contact with the first back portion 102B serves as a fulcrum, and the solar cell module 10B is rotated slightly so that the second end lOse moves in the -Z direction. At this time, the second protrusion 102p is pushed downward by the second main surface lOss of the solar cell module 10, and the elastic portion 102EL of the first back portion 102B becomes elastically deformed in the -Z direction. Then, the solar cell module 10B becomes substantially parallel to the Y-axis, and the second end lOse is moved to a position in front of the opening of the second groove portion 200 as illustrated in Fig. 12. Moreover, as illustrated in Fig. 21, the solar cell module 10B is displaced in the -Y direction, and the second end lOse of the solar cell module 10B contacts the second side portion 203 of the holder 33B. At this time, for example, due to an elastic force generated by the elastic portion 102EL in the +Z direction, the first back portion 102B becomes deformed so that the second protrusion 102p becomes displaced in the +Z direction, and the second protrusion 102p engages with the recess 18a. Thus, the second protrusion 102p serves as a stopper that prevents the solar cell module 10B from being excessively displaced in the +Y direction. Therefore, a failure in that the solar cell module 10B is removed from the second groove portion 200 is not likely to occur.

### <(2-3) Third Modification>

In each of the embodiment, the first modification, and the second modification, the second main surface 10ss of the solar cell module 10 or 10B does not have a projection. However, this is not a limitation. For example, the second main surface lOss of the solar cell module 10 or 10B may have a projection 18b. The projection 18b may be disposed, for example, in a region of the frame 18 of the solar cell module 10 or 10B on the second main surface lOss near the first end 10fe.

To be specific, for example, as illustrated in Figs. 22 to 24, the solar cell module 10 may be changed to a solar cell module 10C in which the projection 18b is formed on a region of the frame 18 on the second main surface lOss side near the first end 10fe. In this case, for example, the holders 31 to 35 may be changed to holders 31C to 35C, in each of which the first back portion 102 is changed to the first back portion 102A including the elastic portion 102EL, which is deformable in the -Z direction. Due to the change, the holder units 30a to 30d, the solar cell module 10, and the photovoltaic system 1 are respectively changed to holder units 30aC to 30dC, the solar cell module 10C, and a photovoltaic system 1C according to the present modification.

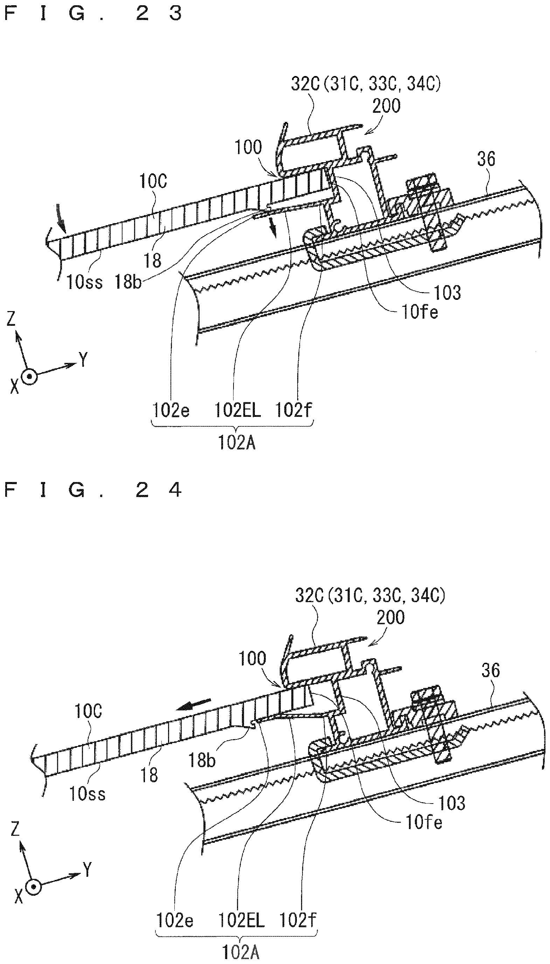

Here, for example, a holder unit 30bC, which includes a holder 32C serving as a first holder and a holder 33C serving as a second holder, will be described. According to the present modification, for example, in the solar cell module 10C, it is sufficient that the distance between the first end 10fe and the projection 18b is smaller than the distance between the first side portion 103 and the end 102e of the first back portion 102A of the holder 32C. In the solar cell module 10C, it is sufficient that the distance between the second end 10se and the projection 18b is smaller than the distance between the second side portion 203 of the second groove portion 200 of the holder 33C and the end 102e of the first back portion 102A of the holder 32C. In the solar cell module 10C, it is sufficient that the distance between the second end lOse and the projection 18b is larger than the distance between the end 202e of the second back portion 202 of the holder 33C and the end 102e of the first back portion 102A of the holder 32C. In this case, as illustrated in Fig. 22, when the first end 10fe of the solar cell module 10C is in contact with the first side portion 103, the projection 18b is located at a position closer to the first side portion 103 than the end 102e of the first back portion 102A. As illustrated in Fig. 24, when the second end 10se of the solar cell module 10C is in contact with the second side portion 203 of the second groove portion 200 of the holder 33C, the projection 18b is located at a position farther from the first side portion 103 than the end 102e of the first back portion 102A.

When such a structure is used, first, as illustrated in Fig. 22, the first end 10fe of the solar cell module 10C is inserted into the first groove portion 100 of the holder 32C. At this time, the first end 10fe is inserted into the first groove portion 100 in a state in which the solar cell module 10C is inclined with respect to the first groove portion 100 in such a way that the second end lOse is located further in the +Z direction from the first end 10fe. Next, as illustrated in Fig. 23, a part of the solar cell module 10C in contact with the first back portion 102A serves as a fulcrum, and the solar cell module 10C is rotated slightly so that the second end lOse moves in the -Z direction. At this time, the first back portion 102A is pushed downward by the projection 18b on the second main surface lOss of the solar cell module 10C, and the elastic portion 102EL of the first back portion 102A becomes elastically deformed in the -Z direction. Then, the solar cell module 10C becomes substantially parallel to the Y-axis, and the second end lOse is moved to a position in front of the opening of the second groove portion 200 as illustrated in Fig. 12. Moreover, as illustrated in Fig. 24, the solar cell module 10C is displaced in the -Y direction, and the second end lOse of the solar cell module 10C contacts the second side portion 203 of the holder 33C. At this time, for example, the projection 18b is displaced to a position in the -Y direction from the end 102e, and due to an elastic force generated by the elastic portion 102EL in the +Z direction, the first back portion 102A becomes deformed so that the end 102e of the first back portion 102A becomes displaced in the +Z direction. As a result, the end 102e is moved to a positon in the Y direction from the projection 18b so that the end 102e contacts the second main surface lOss or becomes located in the vicinity of the second main surface 10ss, and the projection 18b becomes located in the vicinity of the end 102e. Thus, the projection 18b serves as a stopper that prevents the solar cell module 10C from being excessively displaced in the +Y direction. Therefore, a failure in that the solar cell module 10C is removed from the second groove portion 200 is not likely to occur.

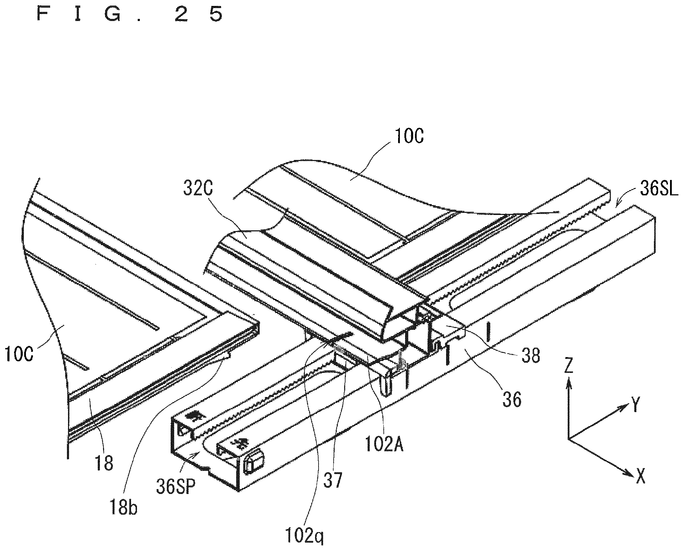

As illustrated in Fig. 25, if the first back portion 102A has a high rigidity and the first back portion 102A is not likely to be elastically deformed, the first back portion 102A may have a slit 102q extending in the Y direction. In this case, the rigidity of the first back portion 102A is reduced, and when the first back portion 102A is pushed downward by the projection 18b, the elastic portion 102EL of the first back portion 102A can be easily deformed in the -Z direction. As a result, attachment of the solar cell module 10 can be facilitated. The first back portion 102A may have a plurality of slits 102q.

### <(2-4) Other Modifications>

In the embodiment and the modifications, for example, the photovoltaic system 1 and 1A to 1C are disposed on the roof 2. However, this is not a limitation. For example, the photovoltaic system 1 and 1A to 1C may be disposed on various structures. In so-called "mega-solar power stations" or the like, which are located in coastal areas or arid regions, the photovoltaic system 1 and 1A to 1C may be directly placed on the ground. Attachment of the solar cell module 10 is easy as long as the first holder (for example, the holder 32) and the second holder (for example, the holder 33) are connected to each other beforehand through a connection member 36E. To be specific, as illustrated in Figs. 8 and 15, in the holder units 30a to 30d and 30aA to 30dA, the plurality of fixing members 36, to which first and second holders (for example, the holders 32 and 33) are attached, may be replaced with the single connection member 36E.

In each of the holders 31 to 34, 31A to 34A, 31B to 34B, and 31C to 34C, which serves as a first holder according to the embodiment and the modifications, the first gap G1 is larger than the third gap G3 in the -Z direction and the second gap G2 is larger than the first gap G1 in the -Z direction. However, this is not a limitation. For example, regardless which one of the first gap G1 and the second gap G2 is larger than the other, it is sufficient that each of the first gap G1 and the second gap G2 is larger than the third gap G3 in the -Z direction. For example, the first gap G1 and the third gap G3 may be substantially the same as each other, and the second gap G2 may be larger than each of the first gap G1 and the third gap G3 in the -Z direction. For example, the third gap G3 may be larger than the first gap G1 in the -Z direction, and the second gap G2 may be larger than the first gap G1 in the -Z direction. In other words, the second gap G2 may be larger than at least one of the third gap G3 and the first gap G1 in the -Z direction. Also with such structures, advantages the same as those of the embodiment and the modifications can be obtained.

All or parts of the embodiment and the modifications may be appropriately used in combination as long as they are consistent with each other.

### Reference Signs List

1, 1A to 1C photovoltaic system
2 roof
3 attachment unit
10, 10B, 10C solar cell module
10fe first end
10fs first main surface
10se second end
lOss second main surface
100, 100A first groove portion
101, 101A first front portion
101b base
101e, 102e, 201e, 202e end
101p first protrusion
102, 102A, 102B first back portion
102EL elastic portion
102s inclined portion
103 first side portion
200, 200A second groove portion
201 second front portion
202 second back portion
203 second side portion
30a to 30d, 30aA to 30dA, 30aB to 30dB, 30aC to 30dC holder unit
31 to 35, 31A to 35A, 31B to 35B, 31C to 35C holder
36 fixing member
36E connection member
300 extending portion
400 overhanging portion
D1 to D5 first to fifth distances
Dr1 first direction
Dr2 second direction
G1 to G3 first to third gaps

## Claims

1. A holder unit (30a-30d, 30aA-30dA, 30aB-30dB, 30aC-30dC) comprising: a first holder (31-35, 31A-35A, 31B-35B, 31C-35C) including a first groove portion (100, 100A) that allows a first end (10fe) of a solar cell module (10, 10B, 10C) to be inserted thereinto in a first direction (Dr1) which corresponds to the direction from the eaves towards the ridge of a roof; and a second holder (31-35, 31A-35A, 31B-35B, 31C-35C) including a second groove portion (200, 200A) that allows a second end (10se) of the solar cell module (10, 10B, 10C) opposite to the first end (10fe) to be inserted thereinto in a second direction (Dr2) opposite to the first direction (Dr1), wherein the first groove portion (100, 100A) includes a first front portion (101, 101A) facing a first main surface (10fs) of the solar cell module (10, 10B, 10C), a first back portion (102, 102A, 102B) facing a second main surface (10ss) behind the first main surface (10fs), and a first side portion (103) connecting the first front portion (101, 101A) and the first back portion (102, 102A, 102B) to each other, wherein the second groove portion (200, 200A) includes a second front portion (201) facing the first main surface (10fs), a second back portion (202) facing the second main surface (lOss), and a second side portion (203) connecting the second front portion (201) and the second back portion (202) to each other, wherein, in the first groove portion (100, 100A), an end (101e) of the first front portion (101, 101A) on the second holder side is located nearer to the first side portion (103) than an end (102e) of the first back portion (102, 102A, 102B) on the second holder side, and the first groove portion (100, 100A) has a first gap (G1) and a second gap (G2) in a third direction from the first front portion (101, 101A) toward the first back portion (102, 102A, 102B), the first gap (G1) being a gap between the end (101e) of the first front portion (101, 101A) on the second holder side and a part of the first back portion (102, 102A, 102B) facing the end (101e) of the first front portion (101, 101A) on the second holder side, the first gap (G1) being larger than a thickness of the solar cell module (10, 10B, 10C),
the second gap (G2) being a gap between the first back portion (102, 102A, 102B) and a part of the first front portion (101,101A) between the first side portion (103) and the end (101e) of the first front portion (101, 101A) on the second holder side, wherein the second gap (G2) is larger than both of the first gap (G1) and a third gap (G3) that is smaller than the first gap (G1) in the third direction, the third gap (G3) being a gap between an imaginary extension surface extending from the first front portion (101,
101A) toward the second holder (31-35, 31A-35A, 31B-35B, 31C-35C) and the end (102e) of the first back portion (102, 102A, 102B) on the second holder side, wherein a first depth (Dp1) of the first groove portion (100, 100A) from the end (101e) of the first front portion (101, 101A) on the second holder side to the first side portion (103) in the first direction (Dr1) is larger than a second depth (Dp2) of the second groove portion (200, 200A) from the end (201e) of the second front portion (201) on the first holder side to the second side portion (203) in the second direction (Dr2), wherein the second holder (31-35, 31A-35A, 31B-35B, 31C-35C) includes an extending portion (300) and an overhanging portion (400), the extending portion (300) extending from the end (202e) of the second back portion (202) on the first holder side in a direction away from the second front portion (201), the overhanging portion (400) sticking out toward the first holder (31-35, 31A-35A, 31B-35B, 31C-35C) from a portion of the extending portion (300) excluding both ends of the extending portion (300) in an extending direction, and wherein a distance between the first side portion (103) and the extending portion (300) is set to be a distance allowing the second end (10se) to be placed on the overhanging portion (400) in loose contact with the extending portion (300) in a state in which the first end (10fe) is in contact with the first side portion (103) .

2. The holder unit (30a-30d, 30aA-30dA, 30aB-30dB, 30aC-30dC) according to Claim 1, further comprising: a connection member (36E) that connects the first holder (31-35, 31A-35A, 31B-35B, 31C-35C) and the second holder (31-35, 31A-35A, 31B-35B, 31C-35C) to each other.

3. The holder unit (30a-30d, 30aA-30dA, 30aB-30dB, 30aC-30dC) according to Claim 1 or 2, wherein the first back portion (102, 102A, 102B) includes an inclined portion (102s), and a gap between the inclined portion (102s) and the first front portion (101, 101A) increases toward the first side portion (103) from a part of the inclined portion (102s) facing the end (101e) of the first front portion (101, 101A) on the second holder side.

4. The holder unit (30aA-30dA) according to any one of Claims 1 to 3, wherein the first front portion (101A) includes a protrusion (101p) between the end (101e) on the second holder side and a base (101b) thereof on the first side portion side, the protrusion (101p) protruding in the third direction, and wherein the first back portion (102A) includes an elastic portion (102EL) between a part thereof facing the protrusion (101p) and the end (102e) on the second holder side, the elastic portion (102EL) being elastically deformable in a direction in which the protrusion (101p) protrudes.

5. A photovoltaic system (1, 1A-1C) comprising:
a solar cell module (10, 10B, 10C) including a first end (10fe), a second end (10se) opposite to the first end (10fe), a first main surface (10fs), and a second main surface (10ss) behind the first main surface (10fs);
a holder unit (30a-30d,30aA-30dA,30aB-30dB,30aC-30dC) according to claim 1.

6. The photovoltaic system (1, 1A-1C) according to Claim 5
wherein the first back portion (102, 102A, 102B) includes an inclined portion (102s), and a gap between the inclined portion (102s) and the first front portion (101, 101A) increases toward the first side portion (103) from a part of the inclined portion (102s) facing the end (101e) of the first front portion (101, 101A) on the second holder side.

7. The photovoltaic system (1A) according to Claim 5 or 6 wherein, in the first groove portion (100A), the first
end (10fe) is separated from the first side portion (103),
wherein the first front portion (101A) includes a protrusion (101p) between the end (101e) on the second holder side and a base (101b) thereof on the first side portion side, the protrusion (101p) protruding to a position that is nearer to the first back portion (102A) than an imaginary extension surface extending from the first main surface (10fs),
wherein a fourth distance (D4) between the protrusion (101p) and the end (201e) of the second front portion (201) on the first holder side is smaller than the first distance (D1), and
wherein the first back portion (102A) includes an elastic portion (102EL) between a part thereof facing the protrusion (101p) and the end (102e) of the first back portion (102A) on the second holder side, the elastic portion (102EL) being elastically deformable in a direction in which the protrusion (101p) protrudes.

## Patentansprüche

1. Eine Halterungseinheit (30a-30d, 30aA-30dA, 30aB-30dB, 30aC-30dC), aufweisend: eine erste Halterung (31-35, 31A-35A, 31B-35B, 31C-35C), aufweisend einen ersten Nutabschnitt (100, 100A), der ermöglicht, dass ein erstes Ende (10fe) eines Solarzellenmoduls (10, 10B, 10C) in einer ersten Richtung (Dr1), die der Richtung von der Traufe in Richtung zu dem First eines Dachs entspricht, in diesen eingesetzt wird, und eine zweite Halterung (31-35, 31A-35A, 31B-35B, 31C-35C), aufweisend einen zweiten Nutabschnitt (200, 200A), der ermöglicht, dass ein zweites Ende (10se) des Solarzellenmoduls (10, 10B, 10C), das entgegengesetzt ist zu dem ersten Ende (10fe), in einer zweiten Richtung (Dr2), die entgegengesetzt ist zu der ersten Richtung (Dr1), in diesen eingesetzt wird, wobei der erste Nutabschnitt (100, 100A) aufweist einen ersten vorderen Abschnitt (101, 101A), der einer ersten Hauptfläche (10fs) des Solarzellenmoduls (10, 10B, 10C) zugewandt ist, einen ersten hinteren Abschnitt (102, 102A, 102B), der einer zweiten Hauptfläche (lOss), die hinter der ersten Hauptfläche (10fs) ist, zugewandt ist, und einen ersten Seitenabschnitt (103), der den ersten vorderen Abschnitt (101, 101A) und den ersten hinteren Abschnitt (102, 102A, 102B) miteinander verbindet, wobei der zweite Nutabschnitt (200, 200A) aufweist einen zweiten vorderen Abschnitt (201), der der ersten Hauptfläche (10fs) zugewandt ist, einen zweiten hinteren Abschnitt (202), der der zweiten Hauptfläche (10ss) zugewandt ist, und einen zweiten Seitenabschnitt (203), der den zweiten vorderen Abschnitt (201) und den zweiten hinteren Abschnitt (202) miteinander verbindet, wobei in dem ersten Nutabschnitt (100, 100A) ein Ende (101e) des ersten vorderen Abschnitts (101, 101A) auf der zweite-Halterung-Seite näher bei dem ersten Seitenabschnitt (103) angeordnet ist als ein Ende (102e) des ersten hinteren Abschnitts (102, 102A, 102B) auf der zweite-Halterung-Seite, und der erste Nutabschnitt (100, 100A) eine erste Lücke (G1) und eine zweite Lücke (G2) in einer dritten Richtung von dem ersten vorderen Abschnitt (101, 101A) in Richtung zu dem ersten hinteren Abschnitt (102, 102A, 102B) hat, wobei die erste Lücke (G1) eine Lücke ist zwischen dem Ende (101e) des ersten vorderen Abschnitts (101, 101A) auf der zweite-Halterung-Seite und einem Teil des ersten hinteren Abschnitts (102, 102A, 102B), der dem Ende (101e) des ersten vorderen Abschnitts (101, 101A) auf der zweite-Halterung-Seite zugewandt ist, wobei die erste Lücke (G1) größer als eine Dicke des Solarzellenmoduls (10, 10B, 10C) ist, wobei die zweite Lücke (G2) eine Lücke zwischen dem ersten hinteren Abschnitt (102, 102A, 102B) und einem Teil des ersten vorderen Abschnitts (101, 101A) zwischen dem ersten Seitenabschnitt (103) und dem Ende (101e) des ersten vorderen Abschnitts (101, 101A) auf der zweite-Halterung-Seite ist,
wobei die zweite Lücke (G2) größer als beide von der ersten Lücke (G1) und einer dritten Lücke (G3) ist, die kleiner als die erste Lücke (G1) in der dritten Richtung ist, wobei die dritte Lücke (G3) eine Lücke zwischen einer imaginären Verlängerungsfläche, die sich von dem ersten vorderen Abschnitt (101, 101A) in Richtung zu der zweiten Halterung (31-35, 31A-35A, 31B-35B, 31C-35C) erstreckt, und dem Ende (102e) des ersten hinteren Abschnitts (102, 102A, 102B) auf der zweite-Halterung-Seite ist, wobei eine erste Tiefe (Dp1) des ersten Nutabschnitts (100, 100A) von dem Ende (101e) des ersten vorderen Abschnitts (101, 101A) auf der zweite-Halterung-Seite zu dem ersten Seitenabschnitt (103) in der ersten Richtung (Dr1) größer als eine zweite Tiefe (Dp2) des zweiten Nutabschnitts (200, 200A) von dem Ende (201e) des zweiten vorderen Abschnitts (201) auf der erste-Halterung-Seite zu dem zweiten Seitenabschnitt (203) in der zweiten Richtung (Dr2) ist, wobei die zweite Halterung (31-35, 31A-35A, 31B-35B, 31C-35C) einen Verlängerungsabschnitt (300) und einen Überhangabschnitt (400) aufweist, wobei sich der Verlängerungsabschnitt (300) von dem Ende (202e) des zweiten hinteren Abschnitts (202) auf der erste-Halterung-Seite in einer Richtung weg von dem zweiten vorderen Abschnitt (201) erstreckt, wobei der Überhangabschnitt (400) von einem Abschnitt des Verlängerungsabschnitts (300) mit Ausnahme beider Enden des Verlängerungsabschnitts (300) in einer Verlängerungsrichtung in Richtung zu der ersten Halterung (31-35, 31A-35A, 31B-35B, 31C-35C) herausragt, und wobei ein Abstand zwischen dem ersten Seitenabschnitt (103) und dem Verlängerungsabschnitt (300) festgesetzt ist, um ein Abstand zu sein, der ermöglicht, dass das zweite Ende (10se) auf dem Überhangabschnitt (400) in losem Kontakt mit dem Verlängerungsabschnitt (300) platziert wird, in einem Zustand, in dem das erste Ende (10fe) mit dem ersten Seitenabschnitt (103) in Kontakt ist.

2. Die Halterungseinheit (30a-30d, 30aA-30dA, 30aB-30dB, 30aC-30dC) gemäß Anspruch 1, ferner aufweisend ein Verbindungselement (36E), das die erste Halterung (31-35, 31A-35A, 31B-35B, 31C-35C) und die zweite Halterung (31-35, 31A-35A, 31B-35B, 31C-35C) miteinander verbindet.

3. Die Halterungseinheit (30a-30d, 30aA-30dA, 30aB-30dB, 30aC-30dC) gemäß Anspruch 1 oder 2, wobei der erste hintere Abschnitt (102, 102A, 102B) einen Neigungsabschnitt (102s) aufweist und eine Lücke zwischen dem Neigungsabschnitt (102s) und dem ersten vorderen Abschnitt (101, 101A) von einem Teil des Neigungsabschnitts (102s) aus, der dem Ende (101e) des ersten vorderen Abschnitts(101, 101A) auf der zweite-Halterung-Seite zugewandt ist, in Richtung zu dem ersten Seitenabschnitt (103) größer wird.

4. Die Halterungseinheit (30aA-30dA) gemäß irgendeinem der Ansprüche 1 bis 3, wobei der erste vordere Abschnitt (101A) einen Vorsprung (101p) zwischen dem Ende (101e) auf der zweite-Halterung-Seite und einer Basis (101b) davon auf der erster-Seitenabschnitt-Seite aufweist, wobei der Vorsprung (101p) in der dritten Richtung hervorsteht, und wobei der erste hintere Abschnitt (102A) einen elastischen Abschnitt (102EL) zwischen einem Teil davon, der dem Vorsprung (101p) zugewandt ist, und dem Ende (102e) auf der zweite-Halterung-Seite aufweist, wobei der elastische Abschnitt (102EL) in einer Richtung, in der der Vorsprung (101p) hervorsteht, elastisch verformbar ist.

5. Ein Photovoltaiksystem (1, 1A-1C), aufweisend:
ein Solarzellenmodul (10, 10B, 10C), aufweisend ein erstes Ende (10fe), ein zweites Ende (10se) entgegengesetzt zu dem ersten Ende (10fe), eine erste Hauptfläche (10fs) und eine zweite Hauptfläche (10ss) hinter der ersten Hauptfläche (10fs),
eine Halterungseinheit (30a-30d, 30aA-30dA, 30aB-30dB, 30aC-30dC) gemäß Anspruch 1.

6. Das Photovoltaiksystem (1, 1A-1C) gemäß Anspruch 5,
wobei der erste hintere Abschnitt (102, 102A, 102B) einen Neigungsabschnitt (102s) aufweist und eine Lücke zwischen dem Neigungsabschnitt (102s) und dem ersten vorderen Abschnitt (101, 101A) von einem Teil des Neigungsabschnitts (102s) aus, der dem Ende (101e) des ersten vorderen Abschnitts (101, 101A) auf der zweite-Halterung-Seite zugewandt ist, in Richtung zu dem ersten Seitenabschnitt (103) größer wird.

7. Das Photovoltaiksystem (1A) gemäß Anspruch 5 oder 6,
wobei in dem ersten Nutabschnitt (100A) das erste Ende (10fe) von dem ersten Seitenabschnitt (103) getrennt ist,
wobei der erste vordere Abschnitt (101A) einen Vorsprung (101p) zwischen dem Ende (101e) auf der zweite-Halterung-Seite und einer Basis (101b) davon auf der erster-Seitenabschnitt-Seite aufweist, wobei der Vorsprung (101p) zu einer Position hervorsteht, die näher bei dem ersten hinteren Abschnitt (102A) als eine imaginäre Verlängerungsfläche ist, die sich von der ersten Hauptfläche (10fs) aus erstreckt,
wobei ein vierter Abstand (D4) zwischen dem Vorsprung (101p) und dem Ende (201e) des zweiten vorderen Abschnitts (201) auf der erste-Halterung-Seite kleiner als der erste Abstand (D1) ist, und
wobei der erste hintere Abschnitt (102A) einen elastischen Abschnitt (102EL) zwischen einem Teil davon, der dem Vorsprung (101p) zugewandt ist, und dem Ende (102e) des ersten hinteren Abschnitts (102A) auf der zweite-Halterung-Seite aufweist, wobei der elastische Abschnitt (102EL) in einer Richtung, in der der Vorsprung (101p) hervorsteht, elastisch verformbar ist.

## Revendications

1. Une unité de support (30a-30d, 30aA-30dA, 30aB-30dB, 30aC-30dC), comportant : un premier support (31-35, 31A-35A, 31B-35B, 31C-35C) comprenant une première partie de rainure (100, 100A) qui permet l'insertion d'une première extrémité (10fe) d'un module de cellules solaires (10, 10B, 10C) là-dedans dans une première direction (Dr1) qui correspond à la direction à partir du chéneau vers la panne faîtière d'un toit ; et un deuxième support (31-35, 31A-35A, 31B-35B, 31C-35C) comprenant une deuxième partie de rainure (200, 200A) qui permet l'insertion d'une deuxième extrémité (10se) du module de cellules solaires (10, 10B, 10C) opposée à la première extrémité (10fe) là-dedans dans une deuxième direction (Dr2) opposée à la première direction (Dr1), où la première partie de rainure (100, 100A) comprend une première partie frontale (101, 101A) faisant face à une première surface principale (10fs) du module de cellules solaires (10, 10B, 10C), une première partie arrière (102, 102A, 102B) faisant face à une deuxième surface principale (10ss) derrière la première surface principale (lOfs), et une première partie latérale (103) reliant la première partie frontale (101, 101A) et la première partie arrière (102, 102A, 102B) l'une à l'autre, où la deuxième partie de rainure (200, 200A) comprend une deuxième partie frontale (201) faisant face à la première surface principale (lOfs), une deuxième partie arrière (202) faisant face à la deuxième surface principale (10ss), et une deuxième partie latérale (203) reliant la deuxième partie frontale (201) et la deuxième partie arrière (202) l'une à l'autre, dans laquelle, dans la première partie de rainure (100, 100A), une extrémité (101e) de la première partie frontale (101, 101A) du côté du deuxième support est située plus proche de la première partie latérale (103) qu'une extrémité (102e) de la première partie arrière (102, 102A, 102B) du côté du deuxième support, et la première partie de rainure (100, 100A) a un premier écart (G1) et un deuxième écart (G2) dans une troisième direction à partir de la première partie frontale (101, 101A) vers la première partie arrière (102, 102A, 102B), le premier écart (G1) étant un écart entre l'extrémité (101e) de la première partie frontale (101, 101A) du côté du deuxième support et une partie de la première partie arrière (102, 102A, 102B) faisant face à l'extrémité (101e) de la première partie frontale (101, 101A) du côté du deuxième support, le premier écart (G1) étant supérieur à une épaisseur du module de cellules solaires (10, 10B, 10C), le deuxième écart (G2) étant un écart entre la première partie arrière (102, 102A, 102B) et une partie de la première partie frontale (101, 101A) entre la première partie latérale (103) et l'extrémité (101e) de la première partie frontale (101, 101A) du côté du deuxième support, où le deuxième écart (G2) est supérieur à tous les deux du premier écart (G1) et d'un troisième écart (G3) qui est inférieur au premier écart (G1) dans la troisième direction, le troisième écart (G3) étant un écart entre une surface d'extension imaginaire s'étendant à partir de la première partie frontale (101, 101A) vers le deuxième support (31-35, 31A-35A, 31B-35B, 31C-35C) et l'extrémité (102e) de la première partie arrière (102, 102A, 102B) du côté du deuxième support, où une première profondeur (Dp1) de la première partie de rainure (100, 100A) à partir de l'extrémité (101e) de la première partie frontale (101, 101A) du côté du deuxième support à la première partie latérale (103) dans la première direction (Dr1) est supérieure à une deuxième profondeur (Dp2) de la deuxième partie de rainure (200, 200A) à partir de l'extrémité (201e) de la deuxième partie frontale (201) du côté du premier support à la deuxième partie latérale (203) dans la deuxième direction (Dr2), où le deuxième support (31-35, 31A-35A, 31B-35B, 31C-35C) comprend une partie d'extension (300) et une partie en surplomb (400), la partie d'extension (300) s'étendant à partir de l'extrémité (202e) de la deuxième partie arrière (202) du côté du premier support dans une direction s'éloignant de la deuxième partie frontale (201), la partie en surplomb (400) faisant saillie vers le premier support (31-35, 31A-35A, 31B-35B, 31C-35C) à partir d'une partie de la partie d'extension (300) sauf les deux extrémités de la partie d'extension (300) dans une direction d'extension, et où une distance entre la première partie latérale (103) et la partie d'extension (300) est définie de manière à être une distance permettant le placement de la deuxième extrémité (10se) sur la partie en surplomb (400) en contact léger avec la partie d'extension (300) dans un état dans lequel la première extrémité (10fe) est en contact avec la première partie latérale (103).

2. L'unité de support (30a-30d, 30aA-30dA, 30aB-30dB, 30aC-30dC) selon la revendication 1, comportant en outre : un élément de liaison (36E) qui relie le premier support (31-35, 31A-35A, 31B-35B, 31C-35C) et le deuxième support (31-35, 31A-35A, 31B-35B, 31C-35C) l'un à l'autre.

3. L'unité de support (30a-30d, 30aA-30dA, 30aB-30dB, 30aC-30dC) selon la revendication 1 ou 2, dans laquelle la première partie arrière (102, 102A, 102B) comprend une partie inclinée (102s), et un écart entre la partie inclinée (102s) et la première partie frontale (101, 101A) s'accroît vers la première partie latérale (103) à partir d'une partie de la partie inclinée (102s) faisant face á l'extrémité (101e) de la première partie frontale (101, 101A) du côté du deuxième support.

4. L'unité de support (30aA-30dA) selon l'une quelconque des revendications 1 à 3, dans laquelle la première partie frontale (101A) comprend une saillie (101p) entre l'extrémité (101e) du côté du deuxième support et une base (101b) de celle-ci du côté de la première partie latérale, la saillie (101p) faisant saillie dans la troisième direction, et dans laquelle la première partie arrière (102A) comprend une partie élastique (102EL) entre une partie de celle-ci faisant face à la saillie (101p) et l'extrémité (102e) du côté du deuxième support, la partie élastique (102EL) étant élastiquement déformable dans une direction dans laquelle la saillie (101p) fait saillie.

5. Un système photovoltaïque (1, 1A-1C), comportant :
un module de cellules solaires (10, 10B, 10C) comprenant une première extrémité (lOfe), une deuxième extrémité (10se) opposée à la première extrémité (lOfe), une première surface principale (10fs) et une deuxième surface principale (10ss) derrière la première surface principale (lOfs) ;
une unité de support (30a-30d, 30aA-30dA, 30aB-30dB, 30aC-30dC) selon la revendication 1.

6. Le système photovoltaïque (1, 1A-1C) selon la revendication 5,
dans lequel la première partie arrière (102, 102A, 102B) comprend une partie inclinée (102s), et un écart entre la partie inclinée (102s) et la première partie frontale (101, 101A) s'accroît vers la première partie latérale (103) à partir d'une partie de la partie inclinée (102s) faisant face à l'extrémité (101e) de la première partie frontale (101, 101A) du côté du deuxième support.

7. Le système photovoltaïque (1A) selon la revendication 5 ou 6,
dans lequel, dans la première partie de rainure (100A), la première extrémité (10fe) est séparée de la première partie latérale (103),
dans lequel la première partie frontale (101A) comprend une saillie (101p) entre l'extrémité (101e) du côté du deuxième support et une base (101b) de celle-ci du côté de la première partie latérale, la saillie (101p) faisant saillie vers une position qui est plus proche de la première partie arrière (102A) qu'une surface d'extension imaginaire s'étendant à partir de la première surface principale (lOfs),
dans lequel une quatrième distance (D4) entre la saillie (101p) et l'extrémité (201e) de la deuxième partie frontale (201) du côté du premier support est inférieure à la première distance (D1), et
dans lequel la première partie arrière (102A) comprend une partie élastique (102EL) entre une partie de celle-ci faisant face à la saillie (101p) et l'extrémité (102e) de la première partie arrière (102A) du côté du deuxième support, la partie élastique (102EL) étant élastiquement déformable dans une direction dans laquelle la saillie (101p) fait saillie.
